# FASCICULE DE BREVET EUROPEEN

(11) **EP 2 346 705 B1**
(45) Date de publication et mention de la délivrance du brevet: **11.06.2014**
(21) Numéro de dépôt: 09768207.4
(22) Date de dépôt: 17.11.2009
(51) Int. Cl.: B60C 23/04

(54) **DISPOSITIF DE DETECTION D'UNE CREVAISON LENTE OU D'UN SOUS-GONFLAGE D'UN PNEUMATIQUE ET PROCEDE CORRESPONDANT**
VORRICHTUNG ZUR FESTSTELLUNG EINES LANGSAMEN LUFTLECKS ODER EINES UNTERDRUCKSBETRIEBS IN EINEM REIFEN UND DEREN VERFAHREN
DEVICE FOR DETECTING A SLOW PUNCTURE OR UNDER-INFLATION OF A TYRE AND CORRESPONDING METHOD

(30) Priorité: 18.11.2008 FR 0857835
(43) Date de publication de la demande: 27.07.2011
(73) Titulaire: Renault S.A.S., 92100 Boulogne-Billancourt (FR)
(72) Inventeur: ANDRIEUX, Arnaud, F-62140 Hesdin (FR); CHABANON, Christian, F-78180 Montigny Le Bretonneux (FR)
(86) Numéro de dépôt international: PCT/FR2009/052201
(87) Numéro de publication internationale: WO 2010/058121

(56) Documents cités:
- EP-A- 1 862 425
- DE-A1-102006 020 471
- US-A- 4 137 520
- US-B1- 6 324 919

## Description

La présente invention a pour domaine d'application la sécurité des véhicules à pneumatiques, et plus particulièrement l'estimation du gonflage des pneumatiques quand le véhicule est en mouvement ainsi que la détection de crevaisons, notamment de crevaisons lentes, desdits pneumatiques.

La détection des crevaisons lentes est particulièrement importante pour le bon fonctionnement des systèmes de sécurité active tels que les antiblocages de roue (type ABS), les contrôleurs de trajectoire (type ESP) et les contrôleurs de motricité (type ASR). En effet, une variation de 5% du rayon d'au moins une des roues du véhicule provoque une mise en défaut des systèmes précédemment cités. La mise en défaut de ces systèmes nuit par conséquent à la sécurité des occupants du véhicule. D'autre part, la non détection d'un sous gonflage d'un pneumatique peut être tout aussi préjudiciable en terme de sécurité des occupants du véhicule sans pour autant utiliser les systèmes de sécurité active précédemment cités. C'est particulièrement le cas sur autoroute, où le sous gonflage d'un pneumatique lié à une haute fréquence de rotation de la roue dudit pneumatique entraîne un échauffement anormal de celui-ci, conduisant dans certains cas à l'éclatement du pneumatique.

L'état de l'art montre que les véhicules actuels possèdent deux catégories de détecteurs de crevaison :
- les détecteurs qui utilisent des capteurs de pressions intégrés dans les valves de gonflage des pneumatiques. Ces capteurs renvoient l'information à intervalles de temps réguliers à un boîtier de réception solidaire de la caisse du véhicule via une liaison non filaire. Les principaux inconvénients de ces systèmes résident dans l'utilisation d'une pile interne au capteur de pression dont la durée de vie est limitée, et dans la difficulté d'interprétation de l'augmentation de la pression interne d'un pneumatique lors de son roulage,
- les détecteurs sans capteurs de pression interne du pneumatiques. Les fonctionnements de la plupart de ces détecteurs sont basés sur une analyse fine des vitesses de rotation des différentes roues du véhicule, et/ou sur une analyse des fréquences de battement vertical desdites roues.

Dans cette catégorie de moyens de surveillance indirects de la pression, la demande de brevet allemand DE 102005004910 (Continental Teves AG) décrit un dispositif de surveillance de pression de pneumatiques basé sur l'analyse de la vitesse de rotation des roue. La vitesse de rotation de la roue est comparée à une vitesse de rotation mémorisée lors d'une opération d'initialisation du dispositif, initialisation qui peut être effectuée par le conducteur du véhicule à un moment où il sait que tous les pneumatiques sont dans une configuration correcte de gonflage.

La demande de brevet PCT WO 2007020202 (Continental Teves AG) décrit une amélioration du dispositif précédent. Le dispositif surveille simultanément la vitesse de rotation des roues et leur fréquence d'oscillation. Les signaux sont comparés à des signaux de référence mémorisés lors d'une opération d'initialisation, initialisation effectuée au démarrage du véhicule à condition que les deux signaux ne soient pas, à ce moment, tous les deux non-conformes par rapport à l'initialisation précédente.

Aucune de ces solutions de l'art antérieur ne donne pleinement satisfaction, à cause notamment des conditions particulières de fonctionnement de ces systèmes, qui nécessitent, pour une détection fiable, que le véhicule se trouve en phase de roulage en ligne droite, à vitesse stabilisée et sur bonne route (sans perte d'adhérence de la roue).

Il est également connu, par le document DE 10 2006 020 471, en accord avec le préambule de la revendication 1, l'agencement de deux accéléromètres disposés perpendiculairement au centre d'une roue de véhicule, dont la réponse temporelle sinusoïdale permet de déterminer l'accélération, la vitesse du véhicule, ainsi que le rayon de la roue, la variation de ce dernier paramètre permettant de refléter la variation de la pression de la roue.

La présente invention a pour objet un dispositif de surveillance de l'état de gonflage d'un pneumatique, ne nécessitant pas de capteur intégré au pneumatique, ledit dispositif permettant la détection de crevaisons et plus spécifiquement de crevaisons à dégonflage lent. Pour ce faire, le dispositif utilise un groupe de signaux périodiques représentatifs du gonflage d'un pneumatique. La détection des situations anormales se fait en extrayant du groupe de signaux collectés, une valeur algébrique unique représentative de l'état de gonflage du pneumatique.

Selon un aspect de l'invention, un dispositif de surveillance de l'état de gonflage d'un pneumatique d'une roue de véhicule automobile comprend des moyens de détermination d'au moins deux signaux élémentaires ayant une composante périodique, lesdits signaux étant dépendants du gonflage du pneumatique, de la position angulaire de la roue autour de son axe de rotation, et des efforts transmis au niveau du moyeu de la roue, ainsi que des moyens de calcul permettant de reconstruire, à partir des signaux élémentaires, une valeur algébrique courante caractéristique de l'état de gonflage courant du pneumatique.

Avantageusement, le dispositif comprend des premiers moyens de filtrage desdits signaux élémentaires apte à atténuer ou à éliminer les composantes périodiques desdits signaux, et un second moyen de filtrage apte à lisser la valeur algébrique courante dans le temps.

Dans un mode de réalisation préféré, les moyens de détermination comprennent au moins deux jauges de contraintes disposées au niveau d'une bague de roulement de la roue.

Dans une variante spécialement favorable de l'invention, les moyens de détermination comprennent huit jauges de contraintes disposées au niveau d'une bague de roulement de la roue.

De manière préférentielle, le dispositif comprend en outre des moyens de mémorisation dans lesquels est stockée au moins une valeur algébrique de référence d'au moins une roue du véhicule, des moyens de comparaison permettant de comparer la valeur algébrique courante et la valeur algébrique de référence de la roue, et des moyens d'alerte aptes à signaler au conducteur, au moyen d'une interface homme machine, un état de sous gonflage ou de crevaison lente du pneumatique quand le rapport entre la valeur algébrique courante et la valeur algébrique de référence devient inférieur à un seuil d'alerte.

Selon un autre aspect, un procédé de surveillance de l'état de gonflage d'un pneumatique d'une roue de véhicule automobile consiste à enregistrer au moins deux signaux élémentaires ayant une composante périodique, lesdits signaux étant dépendants du gonflage du pneumatique, de la position angulaire de la roue autour de son axe de rotation, et des efforts transmis au niveau du moyeu de la roue, puis à calculer, à partir des signaux élémentaires, une valeur algébrique courante caractéristique de l'état de gonflage courant du pneumatique, et à comparer cette valeur algébrique courante à une valeur algébrique de référence, multipliée par un coefficient d'alerte qui est fonction du type de pneumatique.

Avantageusement, préalablement au calcul de la valeur algébrique courante, on effectue un filtrage fréquentiel des signaux élémentaires, ledit filtrage étant indexé sur la vitesse de rotation de la roue, de manière à atténuer ou à éliminer les composantes périodiques desdits signaux.

Selon un mode de mise en oeuvre préféré, on alerte le conducteur d'une situation de sous gonflage ou de crevaison quand le rapport entre la valeur algébrique courante et la valeur algébrique de référence devient inférieur au coefficient d'alerte.

De manière préférentielle, les signaux élémentaires sont enregistrés à partir de jauges de contraintes disposées au niveau d'une bague de roulement de la roue.

Dans une variante de mise en oeuvre, on calcule la valeur algébrique courante comme une combinaison linéaire ou comme une forme polynomiale des signaux élémentaires.

Avantageusement, dans cette variante, les coefficients pondérateurs de la combinaison linéaire ou de la forme polynomiale peuvent être constants.

D'autres caractéristiques et avantages de l'invention apparaîtront à la lecture de la description détaillée d'un mode de réalisation pris à titre d'exemple non limitatif et illustré par les dessins annexés, sur lesquels :
- la figure 1 représente schématiquement un véhicule à quatre roues équipé d'un dispositif de détection d'un sous-gonflage des pneumatiques ;
- les figures 2a et 2b représentent schématiquement une roue dont le rayon effectif varie ;
- la figure 3 illustre certaines variables associées au calcul du rayon effectif ;
- la figure 4 représente les étapes d'un procédé de détermination du sous-gonflage des pneumatiques.

Dans toute la description, par commodité, le rayon effectif d'une roue d'un véhicule est nommé R ou R(t), et se définit comme la distance entre le centre de la roue et la surface du sol.

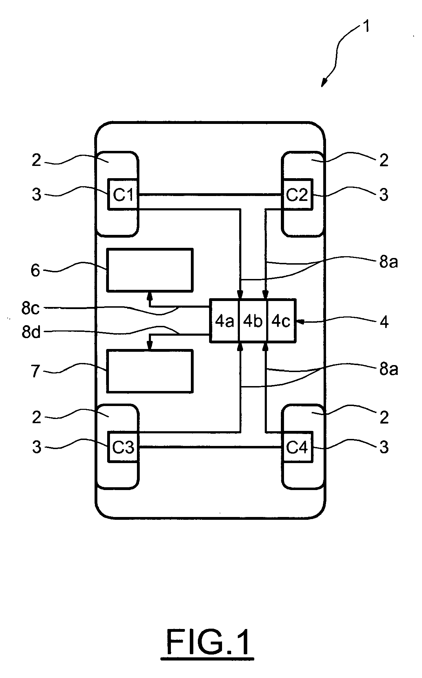

Tel que représenté sur la figure 1, un véhicule 1 comporte quatre roues 2 sur lesquelles sont disposés des roulements instrumentés 3, un bloc fonctionnel 4, une interface Homme- Machine 6, ainsi que des systèmes embarqués 7 à bord du véhicule 1.

Sur chacune des roues 2, les roulements instrumentés 3 sont équipés de jauges de contraintes (non représentées) permettant de mesurer des déformations locales d'une des bagues du roulement (non représenté) de la roue, c'est-à-dire de mesurer des grandeurs proportionnelles aux efforts et aux moments qui s'appliquent au niveau du moyeu de la roue 2 équipée dudit roulement. Les jauges de contrainte des roulements 3 sont reliées au bloc fonctionnel 4 par liaison filaire 8a.

Le bloc fonctionnel 4 comprend un moyen de calcul et de comparaison 4a, un moyen de mémorisation 4b et des moyens de comparaison et d'alerte 4c. Il est relié par une liaison filaire 8c à l'interface Homme-Machine 6 et par une liaison filaire 8d aux systèmes embarqués 7.

Les roulements instrumentés 3 sont similaires à ceux décrits dans la demande de brevet FR 2 869 981, c'est-à-dire qu'une des bagues de chaque roulement est équipée de jauges de contraintes, intégrées ou collées sur la bague à proximité d'un ou de plusieurs chemins de roulement. Avantageusement, les jauges sont disposées sur quatre secteurs de mesure orientés à 90° l'un de l'autre autour de l'axe de rotation de la roue. Dans notre exemple de réalisation, le roulement est équipé d'une jauge par secteur de mesure et par chemin de roulement, soit 8 jauges au total par roulement. Avec huit jauges de contrainte ainsi disposées, il est possible de déterminer toutes les composantes du torseur des efforts exercés sur le moyeu de la roue.

Chaque jauge de contrainte, repérée par son indice i, de la roue 2 émet un signal électrique élémentaire Si(t), i=1, 2 ... 8 correspondant aux déformations subies par la jauge. Ces signaux élémentaires Si(t) sont collectés au travers des connexions 8a par les moyens de calcul 4a, qui élaborent une valeur algébrique R_{filtré}(t), représentant le rayon effectif de la roue 2. Cette valeur R_{filtré}(t) est ensuite comparée à une valeur de référence R_{réf}, stockée dans le moyen de mémorisation 4b, à l'aide d'un coefficient d'alerte K, lui aussi stocké dans le moyen de mémorisation. Si R_{filtré}(t) est inférieur à K * R_{filtré}(t), le moyen d'alerte 4c, envoie un signal d'alerte par les connexions 8c et 8d, pour avertir le conducteur par l'interface Homme-Machine (par exemple un tableau d'affichage) 6, et pour modifier les paramètres de fonctionnement des systèmes embarqués 7 (par exemple des systèmes d'ABS, d'antipatinage ou autre dispositifs de sécurité active).

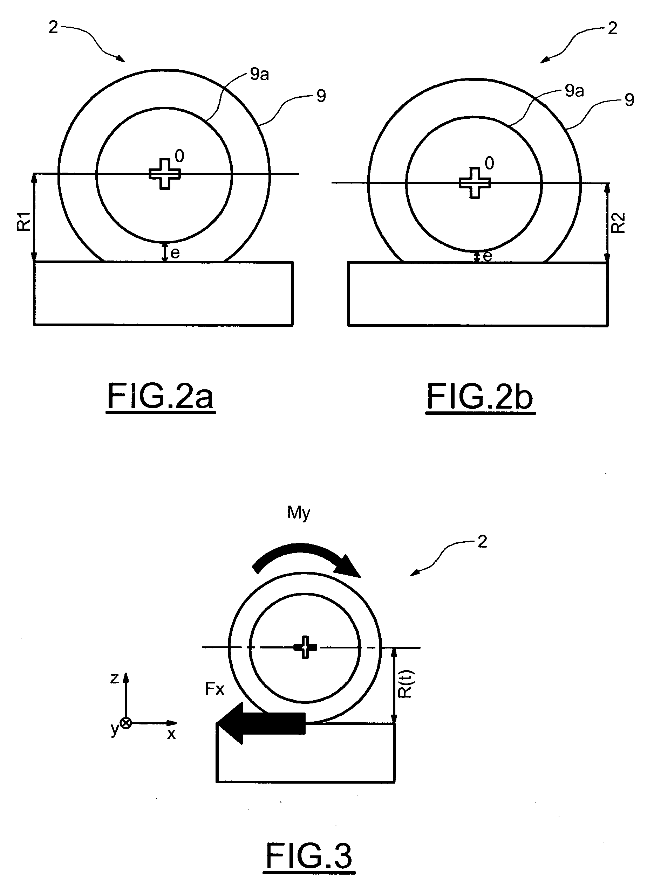

Les figures 2a et 2b représentent deux états d'un pneumatique 9 monté sur une jante 9a d'une roue 2, et illustrent la variation d'un rayon effectif de la roue 2.

Sur la figure 2a, le pneumatique 9 est dans un état de gonflage dit normal pour l'utilisation du véhicule, présentant une pression interne Pn, et un rayon effectif de la roue R1.

Sur la figure 2b, le pneumatique 9 est dans un état de sous-gonflage, c'est-à-dire ayant une pression interne P inférieure à Pn. Le rayon effectif de la roue R2 est inférieur au rayon effectif R1. Le centre 0 de la roue est plus près de la surface du sol, car le pneumatique 9 présente une épaisseur e au niveau du contact avec la surface du sol plus réduite que sur la figure 2a, du fait de sa pression interne P plus faible.

La figure 3 illustre certaines composantes d'effort liées au rayon effectif de la roue 2. La direction d'avancement du véhicule 1 est définie selon un axe x, l'axe y, passant par le centre de la roue 2 est perpendiculaire à l'axe x dans le plan de la surface du sol, et l'axe z est vertical.

A un instant t, le rayon effectif d'une roue peut être obtenu par une équation qui fait intervenir la réaction longitudinale du sol Fx qui correspond à la force exercée par le sol sur la roue selon l'axe x, ainsi que le moment de roulement My de la roue autour de son axe de rotation y, selon la relation : R(t)=My/Fx. Ce rayon effectif pourrait également être obtenu comme le rapport Mx/Fy du moment de carrossage de la roue autour de l'axe x et de la réaction transversale du sol sur la roue 2.

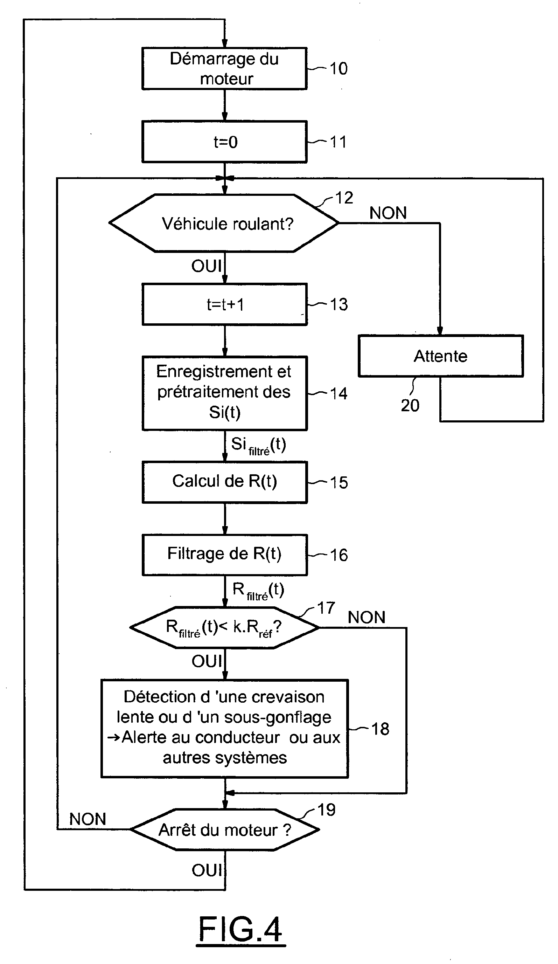

La figure 4 illustre un schéma de fonctionnement du procédé de détection du sous- gonflage du pneumatique.

Le procédé commence à l'étape 10 par le démarrage du moteur. A l'étape 11, le procédé est initialisé à un instant t=0. A l'étape 12, le roulage ou au contraire l'absence de roulage du véhicule est déterminé. Si le véhicule ne roule pas, le procédé est mis en attente lors de l'étape 20, et teste de façon régulière si le véhicule est roulant. Si le véhicule est roulant, le compteur de mesures incrémente le temps d'une unité à l'étape 13. Les signaux élémentaires Si(t) émanant des différentes jauges du roulement de la roue sont enregistrés à l'étape 14, et sont filtrés pour éliminer leur composante périodique. Les signaux filtrés résultants Si_{filtré}(t) sont alors traités, à l'étape 15, par une fonction de transfert qui délivre une valeur brute de rayon effectif R(t). Cette valeur brute de rayon effectif R(t) est ensuite lissée à l'étape 16, et sa valeur filtrée R_{filtré}(t) comparée à une valeur de référence R_{réf} à l'étape 17.

Si le rapport entre le rayon effectif traité R_{filtré}(t) et le rayon effectif de référence R_{réf} est inférieur à une valeur seuil K (Rti≤K*Rref) alors un moyen d'alerte est déclenché par le procédé de détection lors de l'étape 18. Si cela n'est pas le cas, alors le procédé vérifie si le moteur est arrêté ou non lors de l'étape 19. Si le moteur n'est pas arrêté, le procédé recommence à l'étape 12 en incrémentant le compteur de temps t d'une unité. Si le moteur est arrêté, alors le procédé recommence à l'étape 10.

La valeur seuil K, compris entre zéro et 1, est fonction du type de pneumatique utilisé. En effet, si le rayon effectif nominal est une donnée intrinsèque au véhicule, l'épaisseur du pneu et le rayon de la jante peuvent varier. Dans le cas d'un pneu de type "taille basse" par exemple, le seuil d'alerte K sera plus élevé et proche de 1 que dans le cas d'un pneu classique, ce dernier étant apte à supporter une plus grande variation de rayon sans endommager la jante de la roue.

L'étape 14 de prétraitement des signaux élémentaires Si(t) issus des jauges consiste à atténuer ou à supprimer la composante périodique des signaux de la jauge. Ces composantes périodiques sont dues aux déformations de la jauge provoquées par la pression des billes sur le chemin de roulement lors du passage des billes à proximité de la jauge. La fréquence de passage des billes au droit de la jauge étant un multiple (par exemple, le quintuple) de la fréquence de rotation de la roue, la composant périodique du signal peur être atténuée par un filtrage fréquentiel indexé sur la vitesse ou la fréquence de rotation de la roue, par exemple un filtrage supprimant les fréquence supérieures à quatre fois la fréquence de rotation de la roue.

D'autres méthodes de prétraitement sont également envisageables pour éliminer cette composante périodique des signaux, notamment en effectuant des combinaisons linéaires entre les signaux, comme décrit dans la demande de brevet FR 2 869 981 (SNR roulements) ou dans la demande de brevet FR 2 901 018 au nom de la Demanderesse. Dans la demande FR 2 869 981, les coefficients pondérateurs de la combinaison linéaire sont constants, déduits d'un raisonnement géométrique. Dans la demande FR 2 901 018, les coefficients pondérateurs de la combinaison linéaire sont recalculés en permanence en fonction des normes quadratiques de chaque signal. Ces deux méthodes nécessitent un nombre minimal de jauges par zone de mesure sur le roulement, et sont adaptées par exemple pour des roulements instrumentés à 24 jauges.

Le filtrage fréquentiel indexé sur la vitesse de la roue présente l'avantage de ne pas introduire de déphasage dans les signaux élémentaires, et de pouvoir être effectué indépendamment du nombre de jauges.

L'étape 15 consiste à calculer le rayon effectif R(t) de la roue en fonction des signaux élémentaires prétraités Si_{filtré}(t). En effectuant des combinaisons linéaires des signaux élémentaires des différentes jauges, on peut en déduire, suivant des méthodes décrites dans les demandes FR 2 901 018 ou FR 2 869 981, les composantes (forces et moments) des efforts s'exerçant au niveau du moyeu de la roue.

Le rayon effectif R(t) peut par exemple se définir comme le rapport du moment My et de la force Fx définis sur la figure 3. Il est donc possible de calculer ce rayon effectif comme le quotient de deux combinaisons linéaires des signaux élémentaires. Il est également possible de le calculer comme une fonction de transfert des signaux élémentaires, qui coïncide avec la valeur du quotient précédent dans le domaine de calcul du rayon effectif du véhicule. Dans un mode de réalisation préféré, on définit une forme particulière de fonction de transfert entre signaux élémentaires et rayon effectif, par exemple une combinaison linéaire ou une forme polynomiale. Les coefficients pondérateurs de la combinaison linéaire ou de la forme polynomiale sont estimés un fois pour toute avant la mise en service du véhicule, par régression linéaire ou autres type de régression, sur une base d'essais représentative de l'ensemble des sollicitations auxquelles sera soumis le roulement instrumenté 3. Pour cette base d'essai on dispose des différents termes (forces et moments) du torseur des efforts appliqués au roulement, mesurés par un autre moyen, par exemple une roue dynanométrique. La fonction de transfert ainsi définie donne un outil de calcul du rayon effectif qui est moins sujet aux instabilités mathématiques (du type division par zéro) que le calcul par l'intermédiaire d'un quotient entre un moment et une force.

L'étape 16 de filtrage du rayon effectif R(t), par exemple en effectuant une moyenne temporelle, permet de lisser la valeur du rayon effectif dans le temps et d'éliminer des variations instantanées excessives de la valeur R(t) calculée. Ces variations, causées par le bruit de fond du système électronique d'enregistrement des signaux des jauges, pourraient conduire à une alerte intempestive de sous gonflage.

Ainsi, le dispositif permet le calcul simple du rayon effectif d'une roue à partir duquel l'éventuel état de sous gonflage du pneumatique est détecté. Ce calcul du rayon effectif est valable quelle que soit la courbure de la trajectoire du véhicule (ligne droite ou virage), est robuste par rapport au passage par zéro de certains signaux d'efforts, et nécessite un nombre de jauges réduit par rapport à certains roulements instrumentés du commerce. En outre, l'évaluation de l'état de gonflage à partir du rayon effectif du pneumatique est moins sensible à l'échauffement du pneumatique lors du roulage que ne l'est une évaluation à partir de la pression à l'intérieur du pneumatique.

Le rayon effectif calculé selon l'invention peut également être utilisé pour d'autres applications, par exemple pour un calcul précis des vitesses de rotation des roues en vue d'évaluer leur état d'adhérence à la chaussée.

L'invention permet une surveillance continue de l'état de gonflage d'un pneumatique, fiable car basée sur une évaluation quantifiée de l'état du pneumatique. La sécurité des occupants du véhicule est améliorée, grâce à un bon comportement des pneumatiques mais aussi grâce une fiabilité accrue des systèmes de sécurité active du véhicule.

## Revendications

1. Dispositif de surveillance de l'état de gonflage d'un pneumatique (9) d'une roue (2) de véhicule automobile (1) **caractérisé par le fait qu'**il comprend
des moyens de détermination au cours du temps d'au moins deux valeurs de déformation locales d'une bague de roulement de la roue, constituant chacune un signal élémentaire ayant une composante périodique, lesdits signaux de déformation étant dépendants du gonflage du pneumatique (9), de la position angulaire de la roue (2)autour de son axe de rotation, et des efforts transmis au niveau du moyeu de la roue (2),
et des moyens de calcul (4a) permettant de reconstruire, à partir des signaux élémentaires, une valeur algébrique courante caractéristique de l'état de gonflage courant du pneumatique (9).

2. Dispositif de surveillance selon la revendication 1, comprenant en outre des premiers moyens de filtrage desdits signaux élémentaires apte à atténuer ou à éliminer les composantes périodiques desdits signaux, et un second moyen de filtrage apte à lisser la valeur algébrique courante dans le temps.

3. Dispositif de surveillance selon les revendications 1 ou 2, dans lequel les moyens de détermination comprennent au moins deux jauges de contraintes disposées au niveau d'une bague de roulement de la roue (2).

4. Dispositif de surveillance selon les revendications 1 à 3, dans lequel les moyens de détermination comprennent huit jauges de contraintes disposées au niveau d'une bague de roulement de la roue (2).

5. Dispositif de surveillance selon l'une des revendications précédentes, comprenant en outre :
des moyens de mémorisation (4b) dans lesquels est stockée au moins une valeur algébrique de référence d'au moins une roue du véhicule,
des moyens de comparaison (4c) permettant de comparer la valeur algébrique courante et la valeur algébrique de référence de la roue,
et des moyens d'alerte (4c) aptes à signaler au conducteur, au moyen d'une interface homme machine, un état de sous gonflage ou de crevaison lente du pneumatique quand le rapport entre la valeur algébrique courante et la valeur algébrique de référence devient inférieur à un seuil d'alerte.

6. Procédé de surveillance de l'état de gonflage d'un pneumatique d'une roue de véhicule automobile consistant à :
enregistrer au cours du temps au moins deux valeurs de déformations locales d'une bague de roulement de la roue, constituant chacune un signal élémentaire ayant une composante périodique, lesdits signaux de déformation étant dépendants du gonflage du pneumatique (9), de la position angulaire de la roue (2) autour de son axe de rotation, et des efforts transmis au niveau du moyeu de la roue,
calculer, à partir des signaux élémentaires, une valeur algébrique courante caractéristique de l'état de gonflage courant du pneumatique (9),
comparer cette valeur algébrique courante à une valeur algébrique de référence, multipliée par un coefficient d'alerte qui est fonction du type de pneumatique.

7. Procédé de surveillance suivant la revendication 6, consistant en outre, préalablement au calcul de la valeur algébrique courante, à effectuer un filtrage fréquentiel des signaux élémentaires, ledit filtrage étant indexé sur la vitesse de rotation de la roue (2), de manière à atténuer ou à éliminer les composantes périodiques desdits signaux.

8. Procédé de surveillance suivant la revendication 7, consistant en outre à alerter le conducteur d'une situation de sous gonflage ou de crevaison quand le rapport entre la valeur algébrique courante et la valeur algébrique de référence devient inférieur au coefficient d'alerte.

9. Procédé de surveillance suivant les revendications 6 à 8, dans lequel les signaux élémentaires sont enregistrés à partir de jauges de contraintes disposées au niveau d'une bague de roulement de la roue (2).

10. Procédé de surveillance suivant les revendications 6 à 9, dans lequel on calcule la valeur algébrique courante comme une combinaison linéaire ou comme une forme polynomiale des signaux élémentaires.

11. Procédé de surveillance suivant la revendication 10, dans lequel les coefficients pondérateurs de la combinaison linéaire ou de la forme polynomiale sont constants.

## Patentansprüche

1. Vorrichtung zur Feststellung des Druckzustandes eines Luftreifens (9) eines Rades (2) eines Kraftfahrzeugs (1), **dadurch gekennzeichnet, dass** sie umfasst:
Mittel zum Bestimmen mindestens zweier lokaler Verformungswerte eines Laufringes des Rades mit der Zeit, die jeweils ein elementares Signal darstellen, das eine periodische Komponente hat, wobei die Verformungssignale vom Aufblasdruck des Luftreifens (9), von der Winkelposition des Rades (2) um seine Rotationsachse und von den im Bereich der Nabe des Rades (2) übertragenen Kräften abhängen,
und Berechnungsmittel (4a), die es ermöglichen, anhand der elementaren Signale einen laufenden algebraischen Wert, der für den laufenden Druckzustand des Luftreifens (9) charakteristisch ist, zu rekonstruieren.

2. Feststellungsvorrichtung nach Anspruch 1, ferner umfassend erste Filtermittel der elementaren Signale, die geeignet sind, die periodischen Komponenten der Signale zu dämpfen oder zu beseitigen, und ein zweites Filtermittel, das geeignet ist, den mit der Zeit laufenden algebraischen Wert zu glätten.

3. Feststellungsvorrichtung nach den Ansprüchen 1 oder 2, bei der die Bestimmungsmittel mindestens zwei Dehnungsmesser umfassen, die auf Höhe eines Laufringes des Rades (2) angeordnet sind.

4. Feststellungsvorrichtung nach den Ansprüchen 1 bis 3, bei der die Bestimmungsmittel acht Dehnungsmesser umfassen, die auf Höhe eines Laufringes des Rades (2) angeordnet sind.

5. Feststellungsvorrichtung nach einem der vorhergehenden Ansprüche, ferner umfassend:
Speichermittel (4b), in denen mindestens ein algebraischer Referenzwert mindestens eines Rades des Fahrzeugs gespeichert ist,
Vergleichsmittel (4c), die es ermöglichen, den laufenden algebraischen Wert und den algebraischen Referenzwert des Rades zu vergleichen,
und Anzeigemittel (4c), die geeignet sind, dem Fahrer mit Hilfe einer Mensch-Maschine-Schnittstelle einen Zustand eines Unterdrucks oder eines langsamen Luftlecks des Luftreifens anzuzeigen, wenn das Verhältnis zwischen dem laufenden algebraischen Wert und dem algebraischen Referenzwert unter eine Alarmschwelle sinkt.

6. Verfahren zur Feststellung des Druckzustands eines Luftreifens eines Rades eines Kraftfahrzeugs, darin bestehend:
mit der Zeit mindestens zwei lokale Deformationswerte eines Laufringes des Rades aufzuzeichnen, die jeweils ein elementares Signal mit einer periodischen Komponente darstellen, wobei die Deformationssignale vom Aufblasdruck des Luftreifens (9), der Winkelposition des Rades (2) um seine Rotationsachse und den im Bereich der Nabe des Rades übertragenen Kräften abhängen,
anhand der elementaren Signale einen laufenden algebraischen Wert zu berechnen, der für den laufenden Druckzustand des Luftreifens (9) charakteristisch ist,
diesen laufenden algebraischen Wert mit einem algebraischen Referenzwert, multipliziert mit einem Alarmkoeffizienten, der vom Typ des Luftreifens abhängt, zu vergleichen.

7. Feststellungsverfahren nach Anspruch 6, ferner vor der Berechnung des laufenden algebraischen Werts darin bestehend, eine Frequenzfilterung der elementaren Signale durchzuführen, wobei die Filterung auf de Rotationsgeschwindigkeit des Rades (2) indexiert ist, um die periodischen Komponenten der Signale zu dämpfen oder zu beseitigen.

8. Feststellungsverfahren nach Anspruch 7, ferner darin bestehend, den Fahrer vor einer Situation eines Unterdrucks oder eines Luftlecks zu warnen, wenn das Verhältnis zwischen dem laufenden algebraischen Wert und dem algebraischen Referenzwert kleiner als der Alarmkoeffizient wird.

9. Feststellungsverfahren nach den Ansprüchen 6 bis 8, bei dem die elementaren Signale anhand der Dehnungsmesser, die im Bereich eines Laufringes des Rades (2) angeordnet sind, aufgezeichnet werden.

10. Feststellungsverfahren nach den Ansprüchen 6 bis 9, bei dem der laufende algebraische Wert als eine lineare Kombination oder als eine polynominale Form der elementaren Signale berechnet wird.

11. Feststellungsverfahren nach Anspruch 10, bei dem die Gewichtungskoeffizienten der linearen Kombination oder der polynominalen Form konstant sind.

## Claims

1. Device for monitoring the state of inflation of a tyre (9) of an automotive vehicle (1) wheel (2), **characterized by** the fact that it comprises
means for determining over time at least two local values of deformation of a bearing race of the wheel, each constituting an elementary signal having a periodic component, the said deformation signals being dependent on the inflation of the tyre (9), the angular position of the wheel (2) about its rotation axis, and the loads transmitted at the level of the hub of the wheel (2),
and calculation means (4a) making it possible to reconstruct, on the basis of the elementary signals, a current algebraic value characteristic of the current state of inflation of the tyre (9).

2. Monitoring device according to Claim 1, furthermore comprising first means for filtering the said elementary signals, able to attenuate or to eliminate the periodic components of the said signals, and a second filtering means able to smooth the current algebraic value over time.

3. Monitoring device according to either of Claims 1 and 2, in which the determining means comprise at least two strain gauges disposed at the level of a bearing race of the wheel (2).

4. Monitoring device according to Claims 1 to 3, in which the determining means comprise eight strain gauges disposed at the level of a bearing race of the wheel (2).

5. Monitoring device according to one of the preceding claims, furthermore comprising:
storage means (4b) in which is stored at least one reference algebraic value of at least one wheel of the vehicle,
comparison means (4c) making it possible to compare the current algebraic value and the reference algebraic value of the wheel,
and alert means (4c) able to signal to the driver, by means of a man machine interface, a state of under-inflation or of slow puncture of the tyre when the ratio of the current algebraic value to the reference algebraic value becomes less than an alert threshold.

6. Method for monitoring the state of inflation of a tyre of an automotive vehicle wheel consisting in:
recording over time at least two local values of deformations of a bearing race of the wheel, each constituting an elementary signal having a periodic component, the said deformation signals being dependent on the inflation of the tyre (9), the angular position of the wheel (2) about its rotation axis, and the loads transmitted at the level of the hub of the wheel,
calculating, on the basis of the elementary signals, a current algebraic value characteristic of the current state of inflation of the tyre (9),
comparing this current algebraic value with a reference algebraic value, multiplied by an alert coefficient which is dependent on the type of tyre.

7. Monitoring method according to Claim 6, furthermore consisting, prior to the calculation of the current algebraic value, in performing a frequency filtering of the elementary signals, the said filtering being indexed on the rotation speed of the wheel (2), in such a way as to attenuate or to eliminate the periodic components of the said signals.

8. Monitoring method according to Claim 7, furthermore consisting in alerting the driver of a situation of under-inflation or of puncture when the ratio of the current algebraic value to the reference algebraic value becomes less than the alert coefficient.

9. Monitoring method according to Claims 6 to 8, in which the elementary signals are recorded on the basis of strain gauges disposed at the level of a bearing race of the wheel (2).

10. Monitoring method according to Claims 6 to 9, in which the current algebraic value is calculated as a linear combination or as a polynomial form of the elementary signals.

11. Monitoring method according to Claim 10, in which the weighting coefficients of the linear combination or of the polynomial form are constant.
